# EUROPEAN PATENT SPECIFICATION

(11) **EP 2 106 387 B1**
(45) Date of publication and mention of the grant of the patent: **25.01.2012**
(21) Application number: 07869232.4
(22) Date of filing: 13.12.2007
(51) Int. Cl.: C02F 1/44, C02F 1/50, B01D 65/08

(54) **METHOD TO CONTROL REVERSE OSMOSIS MEMBRANE BIOFOULING IN DRINKING WATER PRODUCTION**
VERFAHREN ZUR STEUERUNG DER UMKEHROSMOSE-MEMBRANBIOFÄULNIS BEI DER TRINKWASSERHERSTELLUNG
PROCÉDÉ POUR CONTRÔLER UN BIO-ENCRASSEMENT DE MEMBRANE D'OSMOSE INVERSE DANS LA PRODUCTION D'EAU POTABLE

(30) Priority: 22.01.2007 US 881612 P
(43) Date of publication of application: 07.10.2009
(73) Proprietor: Dow Global Technologies LLC, Midland, MI 48674 (US)
(72) Inventor: NAJMY, Stephen, W., Midland, MI 48640 (US); LOVE, Donald, J., Midland, MI 48640 (US); GARTNER, Charles, D., Midland, MI 48642 (US)
(74) Representative: Raynor, John
(86) International application number: PCT/US2007/087424
(87) International publication number: WO 2008/091453

(56) References cited:
- DOW CHEMICAL CO.: "AQUCAR RO-20 WATER TREATMENT MICROBIOCIDE" PRODUCT INFORMATION, [Online] 2 October 2006 (2006-10-02), XP002477649 Retrieved from the Internet: URL:http://www.dow.com/PublishedLiterature /dh_006b/0901b8038006b33f.pdf?filepath=/Pu blishToInternet/InternetDOWCOM/biocides/pd fs/noreg/253-01767.pdf&fromPage=BasicSearc h> [retrieved on 2008-04-22]
- "Micro-biocide prevents membrane bio-fouling" MEMBRANE TECHNOLOGY, vol. 2005, no. 11, November 2005 (2005-11), page 2, XP005187892 ISSN: 0958-2118

## Description

### BACKGROUND OF THE INVENTION

### 1. Technical Field

This invention relates to the field of water-treatment. More particularly, it relates to methods and means for controlling biofouling of reverse osmosis membranes where municipal water is being produced.

### 2. Background of the Art

The use of desalination technologies is becoming more and more widespread as the supply of clean water, particularly for applications requiring potable water, has become increasingly important and desalination technologies have become more economical. The two major technologies used for desalination include thermal desalination and reverse osmosis. Thermal desalination involves the use of heat to turn water into steam, which is then condensed. The production of steam leaves behind most salt impurities, so the condensed water is nearly salt-free. The other technology, reverse osmosis, involves the use of a selectively permeable membrane, which allows the passage of water, but does not allow the passage of salts and many other undesirable contaminants. Pressure is used to force the water through the membrane, leaving the salts and contaminants behind. Reverse osmosis generally uses two types of selectively permeable membranes. These are acetate membranes and polyamide membranes. At present, polyamide membranes are generally considered to be more efficient and, therefore, more economical than acetate membranes.

Polyamide membranes are typically spiral-wound in order to maximize the membrane surface in the smallest possible volume. Water is forced into the small spaces between the layers of the spirals on what is called the feed side of the membrane, through the membrane at such locations, and therefore to what is called the permeate side of the membrane. Because the spaces between the layers are so small, any material that collects in these spaces may interfere with the functioning of the membrane by slowing down the flow or by increasing the pressure needed to move the water through the membrane. Typical matter that can clog these membranes includes, for example, silt from incoming water and inorganic scale, which is often formed or precipitated in the presence of pressure changes or changes in concentration. The silt may be removed relatively easily, for example, by the appropriate use of pre-filters. Inorganic scale may be prevented by the addition of chemical additives, for example, and acid cleaning may be employed to dissolve scale once it has formed.

However, one problem that has proven to be more difficult to remedy is biofouling of the reverse osmosis membrane. Biofouling is frequently encountered in reverse osmosis systems because of the source waters that may be used. For example, sources for use in these systems often include brackish surface waters obtained from rivers and coastal areas, which frequently include relatively large populations of bacteria. When the bacteria are moved into the small spaces between the layers of the membrane spirals, they tend to colonize the surface and may form a thick biofilm mat. Other sources of biofouling include algae and fungi; bioproducts of any of these living organisms, such as humic acid or other organics; and combinations thereof. Any of these biofouling sources may clog the membrane, thereby reducing flow, or may act as nucleation sites for scale deposits, which also inhibit flow. In either case, the result is reduced membrane performance as well as, frequently, degradation of the membrane polymer itself.

There are known methods for attacking the problem of biofouling in reverse osmosis systems. One approach is to simply replace membranes once they have become unacceptably fouled. This, however, is often economically unfeasible. Another is to treat the membranes off-line to remove the biofouling. This, too, disrupts operation and therefore is also relatively costly.

Still another approach is the online use of non-oxidizing biocides, such as DBNPA (2,2-bromo-3-nitrilopropionamide). Such compounds may be very effective at killing bacteria, for example, but application of such is heretofore been limited to production of water for industrial purposes. This is because of the general belief that biocide levels effective to treat the membrane would not allow production of acceptable municipal water, due to potential contamination of the permeate water with, for example, the DBNPA or its by-products. Because of this, the water produced during treatment with these biocides is, at present, discarded as waste. The product information "Aqucar^{™} RO-20 Water Treatment Microbiocide" issued by the Dow Chemical Company describes the use of non-oxidizing biocide to eliminate biological farling in RO systems for municipal and potable water production, being one example of such approach.

Halogens may also be used to control biofouling, for example, chlorine, which is often in the form of sodium hypochlorite or chlorine gas. In this method the produced water must be subjected to a subsequent dehalogenation step, such as, for example, using a reducing agent such as sodium bisulfite or sodium metabisulfite, in order to prevent the halogen from actually contacting the membrane surface. This is because the halogen will degrade membrane polymers, particularly in the case of polyamide polymers, thereby eventually rendering the membrane unusable. The additional dehalogenation step adds to the expense and inconvenience of the water production process. Furthermore, residual chlorine, in particular, on the permeate side of the membrane, may be unacceptable under applicable water quality regulations. Variations of the halogen approach have included combining an oxidizing biocide, containing a halogen, with a nitrogen compound, which helps to bind the halogen and thereby reduce its contact with the membrane. Examples of these combination oxidizing biocide materials include bromochlorodimethylhydantoin (BCDMH) and trichloro-isocyanuric acid.

Other approaches to membrane biofouling have included use of peracetic acid, ultraviolet light, and ozone. However, peracetic acid will often accelerate the degradation of the membrane, and ultraviolet light and ozone represent cost-intensive methods of treating membranes of the scale typically used for municipal water production.

Thus, what is needed in the art is new methods to treat water for municipal use and to prevent or reduce biofouling of reverse osmosis membranes.

### SUMMARY OF THE INVENTION

Accordingly, the present invention provides, in one aspect, a method of producing municipal water wherein a reverse osmosis membrane is used for desalination or purification, the method comprising adding an effective amount of a non-oxidizing, bromine-containing biocide to a feedwater stream in the substantial absence of a reducing agent, such that the addition occurs on the feed side of a reverse osmosis membrane where a determinable level of the non-oxidizing, bromine-containing biocide is present thereat; passing the feedwater stream through the reverse osmosis membrane such that biofouling of the reverse osmosis membrane is reduced or prevented and the feedwater stream is converted to a produced water stream; testing the produced water stream on the permeate side of the reverse osmosis membrane to measure any bromine-containing compounds therein; and using the measurement of bromine-containing compounds to adjust or control the level of the non-oxidizing, bromine-containing biocide in the feedwater stream on the feed side of the reverse osmosis membrane.

In another aspect the invention provides a method of producing municipal water, the method comprising adding as a biocide an effective amount of 2,2-dibromo-3-nitrilopropionamide to a feedwater stream, in the substantial absence of a reducing agent (preferably a reducing agent selected from the group consisting of sodium bisulfite, sodium metabisulfite, sulfur dioxide, hydrogen sulfide, zinc hydrosulfite, ferrous sulfate, ferrous chloride, boron hydride, and mixtures thereof), such that the addition occurs on the feed side of a reverse osmosis membrane and a determinable level of the biocide is present thereat; passing the feedwater stream through the reverse osmosis membrane such that biofouling of the reverse osmosis membrane is reduced or prevented and the feedwater stream is converted to a produced water stream; testing the produced water stream on the permeate side of the reverse osmosis membrane to measure any bromine-containing compounds therein; and using the measurement to adjust or control the level of the biocide in the feedwater stream on the feed side of the reverse osmosis membrane.

### DETAILED DESCRIPTION OF THE INVENTION

The present invention may be used to prepare municipal water for a variety of purposes, with the produced water potentially being in many embodiments considered to be safe for drinking. The term "municipal water", as used herein, means any water destined to be directly consumed by humans, and thus includes water supplies alternatively designated as "potable water," "culinary water," or "drinking water."

The present invention begins with a feedwater stream. This feedwater stream may be any that is destined for use as municipal water and that is being processed through one or more reverse osmosis membranes for purposes of desalination and/or purification. Thus, the feedwater stream is often one that is either saline or brackish water, but may also be fresh water, recycled waste water, or any combination thereof. In many cases these waters may be obtained from rivers, oceans, estuaries, industrial processes, and the like.

The reverse osmosis membrane may be any that is known to be effective for use in desalination and/or purification processes for water treatment, and particularly for treatment of saline or brackish waters. For example, membranes prepared as thin film composite membranes including, for example, a barrier layer such as a polyamide disposed on a microporous polysulfone interlayer, the polysulfone interlayer being supported in turn on a polyester web layer. Other materials and designs, as known to those skilled in the art, may also be used. In general it is desired that the selected reverse osmosis membrane have a rejection rate of the selected biocide of at least about 95 percent, i.e., a rate of passage by the non-oxidizing, bromine-containing biocide from the feed side to the permeate side of less than or equal to about 5 percent of the feed side concentration.

This invention includes the use of any non-oxidizing, bromine-containing biocide. For example, in one non-limiting embodiment 2,2-dibromo-3-nitrilopropionamide (DBNPA) is selected for use. In another non-limiting embodiment, 2-bromo-2-nitro-1,3-propanediol ("bronopol") may be employed. In general, any bromine-containing organic having a carbon chain length of from 1 to 20 carbons may be selected, provided such exhibits biocidal activity and is non-oxidizing in this application.

The biocide is incorporated into the feedwater stream on the feed side of the reverse osmosis membrane. Such incorporation may be carried out using any means and/or method known to those skilled in the art of water treatment. The incorporation may be by, in some non-limiting embodiments, injection of an aqueous solution of the biocide into the stream. However, any means or method known to those skilled in the art to be efficacious to introduction of the biocide is contemplated hereby.

In the present invention it is particularly advantageous to ensure that the biocide is added to the stream on the feed side of the membrane in the substantial absence of any agent that operates as a reducing agent. As used herein, the term "substantial absence" refers to the absence of any amount of the reducing agent that would be sufficient to result, in the presence of the biocide, in an unacceptable level of bromine-containing organic compounds in the produced water, i.e., on the permeate side of the membrane. Agents operating as reducing agents include, but are not limited to, sodium bisulfite, sodium metabisulfite, sulfur dioxide, hydrogen sulfide, zinc hydrosulfite, ferrous sulfate, ferrous chloride, boron hydride compounds, combinations thereof, and the like.

It has been found that reducing agents, including but not limited to those listed hereinabove, may react with the non-oxidizing biocides of the invention, including but not limited to DBNPA, to produce such brominated organics. For example, where 2,2-dibromo-3-nitrilopropionamide (DBNPA) is selected as the non-oxidizing biocide, it may react with sodium bisulfite to produce its monobrominated decomposition products, including 2-bromo-3-nitrilo-propionamide (MBNPA) and the hydrolysis product thereof, monobromomalonamide (MBMA), as well as residual DBNPA. Since all of these pass through the reverse osmosis membrane to at least some extent, and the monobrominated products may pass through to a greater extent than the DBNPA, the result may be unacceptably high levels of bromine-containing organics in the produced water on the permeate side. Thus, limitation or elimination of the presence of the reducing agent is important in ensuring that the produced water exhibits desirably low levels of all bromine-containing residual and decomposition products.

In order to ensure that a substantial absence of any reducing agent exists in the environment of the membrane in general and of the non-oxidizing biocide in particular, it may, in certain non-limiting embodiments, be desirable to stop, or turn off, any reducing agent that is being introduced into the feedwater stream on the feed side of the membrane at some point prior to introduction of the non-oxidizing biocide. For example, in some municipal water treatment scale embodiments it has been found useful to allow about 15 minutes between termination of reducing agent flow and initiation of biocide flow. The appropriate time interval will be easily determined by those skilled in the art, and means such as an oxidation-reduction potentiometer may be used to indicate the presence or absence of reducing agent in a given locale.

An aspect of the invention includes measurement of the produced water stream on the permeate side of the membrane in order to determine the level of such brominated compounds, including both DBNPA or other non-oxidizing biocide, and any brominated residual or decomposition products thereof, such as MBNPA, MBMA, combinations thereof, and the like. Measurement may be by any means and/or method known to those skilled in the art, including, for example, use of high performance liquid chromatography (HPLC), a total oxidizer test kit (such as a Hach test kit), neutron activation, or a combination thereof. In certain non-limiting embodiments, the use of HPLC is desirably effective. It is noted that X-ray fluorescence may be useful to track the amount of DBNPA or other non-oxidizing biocide in the feedwater on the feed side of the membrane, the method is generally less preferred in the produced water on the permeate side to detect the residual amounts of biocide and/or the monobrominated degradation products thereof, because the concentrations in the produced water may be too low to quantify via this method. However, X-ray fluorescence may be suitable on the permeate side if used in correlation with another method, such as HPLC. Thus, it will be seen by those skilled in the art that the measurement system may be either one that is capable of differentiating the residual biocide from its degradation products, or one which is incapable of differentiating, for example, a method that measures simply total bromine content, but that it is desirable that such a method be capable of effectively measuring the total bromine in the concentrations present in the produced water. Equipment for carrying out these measurements is generally known, and its operation will be familiar to those practicing in the water treatment technology field.

Once the measurement has been obtained in the produced water on the permeate side, it is then used for appropriate adjustment or control of the amount of biocide being used, which may also include appropriate calculation of rate of introduction, on the feed side of the membrane. This will ensure that the level of bromine-containing compounds of all kinds in the produced water meets applicable regulations pertaining to municipal water. It is this ability to employ an effective biocide, while still producing water that is considered to be safe for human consumption, that makes use of this invention in municipal water treatment so unexpectedly advantageous.

In general it is desirable to ensure that the amount of biocide employed is the minimum amount which controls biofouling of the membrane to a desirable extent, and no more. A fixed concentration dosage is most conveniently employed, for example, such that it is maintained in the feedwater stream, on the feed side of the membrane, within a range of from about 1 to about 10 parts per million (ppm), but a range of from about 100 parts per billion (ppb) to about 100 ppm may be effectively employed. This will depend upon the feedwater stream and the measurements obtained of the produced water stream on the permeate side of the reverse osmosis membrane system, that may indicate the ability or need to increase or decrease the level on the feed side. In many non-limiting embodiments it is desirable or necessary, according to applicable regulations, to achieve permeate side measurements in the parts per billion (ppb) range, in some cases less than about 100 ppb, and in other cases less than about 50 ppb. It is noted that HPLC may be required in order to measure levels of DBNPA and its degradation products at levels as low as about 30 to about 40 ppb.

While flow rates and membrane pressures obtained thereby are not considered to be critical parameters of the invention, they are generally critical to operation of the membrane or membrane system. Those skilled in the art will be aware of the effect of these on the operation of the reverse osmosis membrane system in general. Nonetheless, such will obviously need to be taken into account in determining and maintaining the desired level of the non-oxidizing biocide in the feedwater. Operation of the reverse osmosis system may generally be carried out under any atmospheric pressure, from sub-atmospheric to super-atmospheric. However, the feedwater stream is generally subjected to substantial flow pressure to move it through the membrane. For example, in certain municipal systems, flow pressures from about 800 to about 1000 psig may be effectively used for seawater feedstreams, or from about 150 to about 300 psig for brackish water feedstreams. Those skilled in the art will be aware that a number of factors may affect the optimal flow pressure, including, for example, membrane design, source water quality, and the like.

The temperature profile used to carry out the method of the invention is desirably one that approximates the range of natural water temperatures for the source water. This range is generally from about 50°F to about 100°F (about 10°C to about 38°C), but a much wider range, from about 32°F to about 150°F (about 0°C to about 66°C), may alternatively be employed. Selection of a specific non-oxidizing biocide and adjustments of the balance between time in the feedwater stream on the feed side of the membrane, feedwater stream temperature, and selected pressure may enable effective use of a number of alternative parameter selections while still achieving the same, or substantially the same, final result.

In certain non-limiting embodiments, the use of the selected non-oxidizing biocide, in combination with the substantial absence of reducing agents, has been found to successfully control biofouling of the membrane to acceptable levels. Thus, the life of the membrane is extended while its operation efficiency may be effectively maintained, thus contributing significantly toward improving the economics of the reverse osmosis membrane desalination and/or purification process as a whole.

The description and examples discussed hereinabove and below are intended to provide to the skilled practitioner the general concepts, means and methods necessary to understand the invention and, when combined with a level of understanding typical of those skilled in the art, to practice it. It will therefore be understood that not all embodiments deemed to be within the scope of the invention are herein explicitly described, and that many variations of each embodiment, including but not limited to selection of non-oxidizing biocide, source waters, membrane and system design, flow pressures and temperatures, treatment protocols, measuring equipment, and the like, not described explicitly or in detail herein, will still fall within the general scope of the invention.

The invention having been generally described, the following examples are given as particular embodiments of the invention and serve to demonstrate the practice and advantages thereof. It is understood that the examples are given by way of illustration and are not intended to limit the specification or the claims to follow in any manner.

### EXAMPLES

### Example 1

A brackish feedwater stream flows through a reverse osmosis membrane designed for brackish water, for purification purposes. The brackish feedwater is analyzed to contain 2000 ppm NaCl in deionized water. The compound 2,2-dibromo-3-nitrilopropionamide (DBNPA) is then flowed into the stream in an aqueous solution including 50 percent by weight polyethylene glycol, 30 percent by weight water, and 20 percent by weight DBNPA, such that the concentration of DBNPA in the feedwater stream is maintained at 1 ppm for the first sample (BW1), and at 10 ppm for the second sample (BW2), based on the flow rate of the feedwater stream.

The produced water on the permeate side of the membrane is then measured for DBNPA and also for the presence of dibromoacetonitrile (DBAN) and 2-bromo-3-nitrilopropionamide (MBNPA), which are, respectively, a hydrolysis product and a nucleophilic degradation product of DBNPA. The "DBNPA Rejection" is the percent of the DBNPA present in the feedwater stream, on the feed side of the membrane, that is prevented from passing through and is therefore not present in the produced water. The results of the testing are shown in Table 1.

**Table 1**

| Sample | Prepared DBNPA (ppm) | Neutron Activation Analysis (ppm-Br) | | DBNPA Rejection |
|---|---|---|---|---|
| | Feed | Feed | Permeate | % |
| BW1 | 1 | 0.74 | ND@0.04 | -- |
| | | 0.79 | ND@0.04 | -- |
| BW2 | 10 | 7.1 | 0.081 | 98.86 |
| | | 7.1 | 0.075 | 98.94 |

| | | | | |
|---|---|---|---|---|
| BW refers to "brackish water." ND@ means "not detectable at." -- means no data obtained. | | | | |

### Example 2

The same procedure is followed as in Example 1, but instead using a seawater stream, containing 32,000 ppm NaCl in deionized water, and a reverse osmosis membrane designed for seawater. All other conditions are identical, with the sample taken at 1 ppm DBNPA being designated as SW1, and the sample taken at 10 ppm DBNPA being designated as SW2. The results are shown in Table 2.

**Table 2**

| Sample | Prepared DBNPA (ppm) | Neutron Activation Analysis (ppm-Br) | | DBNPA Rejection |
|---|---|---|---|---|
| | Feed | Feed | Permeate | % |
| SW1 | 1 | 2 | ND@0.04 | >98.0 |
| | | 2.1 | ND@0.04 | >98.1 |
| SW2 | 10 | 8.3 | ND@0.04 | >99.5 |
| | | 8.4 | ND@0.04 | >99.5 |

| | | | | |
|---|---|---|---|---|
| SW refers to "seawater." ND@ means not detectable at. | | | | |

### Comparative Example 1

Comparative measurements are taken to illustrate the effect of the residual presence, versus the substantial absence, of a sodium bisulfite reducing agent in a brackish feedwater stream under actual municipal water supply processing conditions at two sites. The reverse osmosis membranes in each case are those designed for use in brackish feedwater streams. In these two cases the bromine-containing compounds identified include DBAN; dibromomalonamide (DBMA), which is a hydrolysis product of DBNPA; MBNPA; and monobromomalonamide (MBMA), which is a hydrolysis product of MBNPA. For the residual presence samples, two samples are taken from the first facility (designated Fac. 1 #1 and Fac 1 #2) and one from the second facility (designated Fac 2 - #1). For the substantial absence samples, one sample is taken from the first facility (designated Fac 1 #3) and two from the second facility (designated Fac 2 - #2 and Fac 2 - #3). The results for percent rejection are shown in Table 3.

**Table 3**

| | DBNPA | DBAN | MBNPA |
|---|---|---|---|
| Normal Operation (NaHSO₃ Residual) | | | |
| Fac 1 - #1 | 98.9 | 97.7 | 70.3 |
| Fac 1 - #2 | 98.1 | 97.3 | 69.5 |
| Fac 2 - #1 | 99.2 | 84.3 | 91.5 |

| Test (NaHSO₃ Substantially Free) | | | |
|---|---|---|---|
| Fac 1 - #3 | 99.2 | 98.5 | 85.9 |
| Fac 2 - #2 | 99.1 | 90.1 | 89.0 |
| Fac 2 - #3 | 99.1 | 85.2 | 89.7 |

### Comparative Example 2

Measurements are made at the municipal water production facilities designated in Comparative Example 1 to compare the concentration indices, (relative to the DBNPA concentration) of DBAN, DBMA, MBNPA and MBMA in the produced water stream. Thus, concentration of DBNPA is set as equal to "1" and all other concentrations are recorded relative to "1". Conditions are the same as in Comparative Example 1, and the results are shown in Table 4.

**Table 4**

| | DBAN | DBMA | MBNPA | MBMA |
|---|---|---|---|---|
| Normal Operation (NaHSO₃ Residual) | | | | |
| Fac 1 - #1 | 0.23 | 0.58 | 16 | 4.4 |
| Fac 1 - #2 | 0.10 | 0.16 | 4.23 | 0.65 |
| Fac2 - #1 | 0.35 | 0.37 | 1.93 | <0.1 |
| Test (NaHSO₃ Substantially Free) | | | | |
| Fac 1 - #3 | 0.09 | <0.15 | 0.65 | <0.15 |
| Fac 2 - #2 | 0.18 | 0.14 | 0.29 | <0.1 |
| Fac 2 - #3 | 0.24 | 0.31 | 0.26 | <0.1 |

## Claims

1. A method of treating water for municipal use (meaning any water destined to be directly consumed by humans), wherein a reverse osmosis membrane is used for desalination or purification, the method comprising
adding an amount of a non-oxidizing, bromine-containing biocide to a feedwater stream in the substantial absence of a reducing agent, such that the addition occurs on the feed side of a reverse osmosis membrane and a determinable level of the non-oxidizing, bromine-containing biocide is present thereat, wherein the non-oxidizing bromine containing biocide is 2,2-dibromo-3-nitrilopropionamide (DBNPA);
passing the feedwater stream through the reverse osmosis membrane such that biofouling of the reverse osmosis membrane is reduced or prevented and the feedwater stream is converted to a produced water stream;
testing the produced water stream on the permeate side of the reverse osmosis membrane to measure bromine-containing compounds therein, wherein the bromine-containing compounds are 2,2-dibromo-3-nitrilopropionamide (DBNPA), 2-bromo-3-nitrilopropionamide (MBNPA) and monobromomalonamide (MBMA); and
using the measurement of the bromine-containing compounds to adjust or control the level of the non-oxidizing, bromine-containing biocide in the feedwater stream on the feed side of the reverse osmosis membrane.

2. The method of claim 1 wherein the reducing agent is selected from the group consisting of sodium bisulfite, sodium metabisulfite, sulfur dioxide, hydrogen sulfide, zinc hydrosulfite, ferrous sulfate, ferrous chloride, boron hydride compounds, and combinations thereof.

3. The method of claim 1 wherein the feedwater stream is selected from the group consisting of saline water, brackish water, fresh water, recycled waste water, and combinations thereof.

4. The method of claim 1 wherein the biofouling is the result of the presence of bacteria, algae, or fungi; bioproducts of any of the foregoing; or a combination thereof.

5. The method of claim 1 wherein testing is done using high performance liquid chromatography (HPLC), a total oxidizer test kit, neutron activation, or a combination thereof.

6. The method of claim 1 wherein the reverse osmosis membrane has a rejection rate of the non-oxidizing, bromine-containing biocide that is equal to or greater than 95 percent.

7. The method of claim 1 wherein the level of the bromine-containing compounds in the produced water stream is acceptable under an applicable municipal water regulation.

8. The method of claim 1 wherein the feedwater stream is under a pressure from 1.03MPa to 6.89MPa (150 to 1000 psig).

9. The method of claim 1 wherein the feedwater stream is at a temperature from 0°C to 66°C (32°F to 150°F).

10. The method of claim 1 wherein the level of the biocide in the feedwater stream on the feed side of the reverse osmosis membrane is from 100 parts per billion (ppb) to 100 parts per million (ppm).

11. The method of claim 10 wherein the level is from 1 ppm to 10 ppm.

## Patentansprüche

1. Verfahren zum Behandeln von Wasser zur kommunalen Verwendung (d.h. jegliches Wasser, das zum direkten Verbrauch durch Menschen bestimmt ist), wobei eine Umkehrosmose-Membran zur Entsalzung oder Reinigung verwendet wird, mit den folgenden Schritten:
Zugabe einer Menge eines nicht-oxidierenden bromhaltigen Biozids zu einem Speisewasserstrom im Wesentlichen ohne ein Reduktionsmittel, so dass die Zugabe auf der Zulaufseite einer Umkehrosmose-Membran erfolgt und eine festlegbare Konzentration des nicht-oxidierenden bromhaltigen Biozids darauf vorhanden ist, wobei das nichtoxidierende bromhaltige Biozid 2,2-Dibromo-3-nitrilopropionamid (DBNPA) ist;
Hindurchleiten des Speisewasserstroms durch die Umkehrosmose-Membran, so dass das Biofouling der Umkehrosmose-Membran verringert oder verhindert wird und der Speisewasserstrom in einen Produktionswasserstrom umgewandelt wird;
Testen des Produktionswasserstroms auf der Permeatseite der Umkehrosmose-Membran, um bromhaltige Verbindungen darin zu messen, wobei es sich bei den bromhaltigen Verbindungen um 2,2-Dibromo-3-nitrilopropionamid (DBNPA), 2-Brom-3-nitrilopropionamid (MBNPA) und Monobrommalonamid (MBMA) handelt; und
Verwendung der Messung der bromhaltigen Verbindungen zur Regulierung oder Steuerung der Konzentration des nicht-oxidierenden bromhaltigen Biozids in dem Speisewasserstrom auf der Zulaufseite der Umkehrosmose-Membran.

2. Verfahren nach Anspruch 1, wobei das Reduktionsmittel aus der aus Natriumbisulfit, Natriummetabisulfit, Schwefeldioxid, Schwefelwasserstoff, Zinkhydrosulfit, Eisen(II)-sulfat, Eisen(II)-chlorid, Borhydridverbindungen und Kombinationen davon bestehenden Gruppe ausgewählt ist.

3. Verfahren nach Anspruch 1, wobei der Speisewasserstrom aus der aus Salzwasser, Brackwasser, Frischwasser, wiederaufbereitetem Abwasser und Kombinationen davon bestehenden Gruppe ausgewählt ist.

4. Verfahren nach Anspruch 1, wobei das Biofouling das Ergebnis des Vorhandenseins von Bakterien, Algen oder Pilzen; Bioprodukten eines der Vorgenannten; oder einer Kombination davon ist.

5. Verfahren nach Anspruch 1, wobei das Testen mit Hilfe von Hochleistungsflüssigchromatographie (HPLC), einem Testkit zum Nachweis von Oxidationsmitteln, Neutronenaktivierung oder einer Kombination davon erfolgt.

6. Verfahren nach Anspruch 1, wobei die Umkehrosmose-Membran eine Ablehnungsrate des nicht-oxidierenden bromhaltigen Biozids von gleich oder größer als 95 Prozent hat.

7. Verfahren nach Anspruch 1, wobei die Konzentration der bromhaltigen Verbindungen in dem Produktionswasserstrom unter den geltenden Bestimmungen der kommunalen Wasserwirtschaft akzeptabel ist.

8. Verfahren nach Anspruch 1, wobei der Speisewasserstrom unter einem Druck von 1,03 MPa bis 6,89 MPa (150 bis 1000 psig) steht.

9. Verfahren nach Anspruch 1, wobei der Speisewasserstrom eine Temperatur von 0°C bis 66°C (32°F bis 150°F) hat.

10. Verfahren nach Anspruch 1, wobei die Konzentration des Biozids in dem Speisewasserstrom auf der Zulaufseite der Umkehrosmose-Membran von 100 Teile pro Milliarde (ppb) bis 100 Teile pro Million (ppm) beträgt.

11. Verfahren nach Anspruch 10, wobei die Konzentration von 1 ppm bis 10 ppm beträgt.

## Revendications

1. Procédé de traitement d'eau à usage public (ce qui désigne toute eau destinée à être consommée directement par des humains) dans lequel on utilise une membrane d'osmose inverse à des fins de dessalement ou de purification, lequel procédé comporte les étapes suivantes :
ajouter une certaine quantité d'un biocide bromé non-oxydant à un courant d'eau d'alimentation, en la quasi-absence d'un agent réducteur, de telle façon que l'addition ait lieu sur le côté alimentation d'une membrane d'osmose inverse et que le biocide bromé non-oxydant se trouve présent à ce niveau en un taux mesurable, lequel biocide bromé non-oxydant est du 2,2-dibromo-3-nitrilo-propionamide (DBNPA) ;
faire passer le courant d'eau d'alimentation à travers la membrane d'osmose inverse, de sorte que le bio-encrassement de la membrane d'osmose inverse est réduit ou empêché et que le courant d'eau d'alimentation est converti en un courant d'eau produite ;
soumettre le courant d'eau produite, sur le côté perméat de la membrane d'osmose inverse, à des tests de dosage des composés bromés contenus dedans, lesquels composés bromés sont le 2,2-dibromo-3-nitrilo-propionamide (DBNPA), le 2-bromo-3-nitrilo-propionamide (MBNPA) et le monobromo-malonamide (MBMA) ;
et utiliser les résultats de dosage des composés bromés pour ajuster ou réguler le taux de biocide bromé non-oxydant dans le courant d'eau d'alimentation sur le côté alimentation de la membrane d'osmose inverse.

2. Procédé conforme à la revendication 1, pour lequel l'agent réducteur est choisi dans l'ensemble formé par les bisulfite de sodium, métabisulfite de sodium, dioxyde de soufre, sulfure d'hydrogène, hydrosulfite de zinc, sulfate ferreux, chlorure ferreux et composés de type borohydrure, ainsi que leurs combinaisons.

3. Procédé conforme à la revendication 1, dans lequel le courant d'eau d'alimentation est choisi dans l'ensemble constitué par une eau saline, une eau saumâtre, une eau douce, une eau usée recyclée, et leurs combinaisons.

4. Procédé conforme à la revendication 1, dans lequel le bio-encrassement est le résultat de la présence de bactéries, d'algues ou de champignons, ou de produits biologiques de n'importe lesquels des précédents, ou d'une combinaison de ces éléments.

5. Procédé conforme à la revendication 1, dans lequel le dosage est effectué par chromatographie en phase liquide haute performance (HPLC), au moyen d'une trousse de test par oxydation totale, ou par activation par neutrons, ou par une combinaison de ces méthodes.

6. Procédé conforme à la revendication 1, dans lequel la membrane d'osmose inverse présente un taux de rejet du biocide bromé non-oxydant supérieur ou égal à 95 %.

7. Procédé conforme à la revendication 1, dans lequel le taux de composés bromés dans le courant d'eau produite est admissible selon la règlementation publique applicable à l'eau.

8. Procédé conforme à la revendication 1, dans lequel le courant d'eau d'alimentation se trouve sous une pression de 1,03 à 6,89 MPa (150 à 1000 psig).

9. Procédé conforme à la revendication 1, dans lequel le courant d'eau d'alimentation se trouve à une température de 0 à 66 °C (32 à 150 °F).

10. Procédé conforme à la revendication 1, dans lequel le taux de biocide dans le courant d'eau d'alimentation sur le côté alimentation de la membrane d'osmose inverse vaut de 100 parties par milliard (ppmd) à 100 parties par million (ppm).

11. Procédé conforme à la revendication 10, dans lequel le taux vaut de 1 ppm à 10 ppm.
